# EUROPEAN PATENT APPLICATION

(11) **EP 4 745 640 A1**
(43) Date of publication of application: **20.05.2026**
(21) Application number: 24221419.5
(22) Date of filing: 19.12.2024
(51) Int. Cl.: G02B 6/44

(54) **HORIZONTALLY STACKABLE CABLE GUIDES**

(30) Priority: 14.11.2024 US 202463720211 P
(71) Applicant: Corning Research & Development Corporation, Corning, New York 14831 (US)
(72) Inventor: GALINSKI, Hubert Stanislaw, 95-015 Glowno (PL); RUDA, Michal, 95-060 Brzeziny (PL)
(74) Representative: Reddie & Grose LLP

(57) **Abstract**

The present disclosure relates to cable guides that are horizontally stackable to provide a pathway to route optical fiber cables. The cable guide has a linking region that allows the cable guide to link with another cable guide to lengthen the cable pathway for optical fiber cables passing therethrough and to increase the degree of turn for the optical fiber cable. As additional cable guides are linked together, the amount of turn that an optical fiber cable can undergo through the cable pathway increases.

## Description

### Priority Application

This application claims the benefit of priority of U.S. Provisional Application No. 63/720,211, filed on November 14, 2024, the content of which is relied upon and incorporated herein by reference in its entirety.

### Technical Field

This disclosure relates generally to cable guides through which optical fiber cables are routed, and more particularly, to horizontally stackable cable guides.

### Background

The large amount of data and other information transmitted over the internet has led businesses and other organizations to develop large scale fiber optic networks for organizing, processing, storing and/or disseminating large amounts of data. Network design and cabling-infrastructure architecture are becoming increasingly large and complex to handle growing industry needs.

There are many different network architectures, and the various tasks required to distribute optical signals (e.g., splitting, splicing, routing, connecting subscribers) can occur at several locations. Regardless of whether a location is considered a central office, local convergence point, network access point, subscriber premise, or something else, fiber optic equipment is used to house components that carry out one or more of the tasks. The fiber optic equipment, which may include fiber distribution hubs (FDH), cabinets, closures, network interface devices, distribution frames, etc. Many types of fiber optic equipment include equipment racks or frames to which components are mounted. Organizing fiber optic cables within this equipment can be a challenge.

Although most current cabling infrastructure architecture is satisfactory for present industry needs, the increasing density of equipment trays and feeder cables within racks requires a more adaptable and dependable cable management system, particularly for trays that are selectively removable from the equipment rack. The ever-increasing optical fibers and connector density within racks requires more technician time for installation and maintenance. This drives the costs of installation and maintenance of fiber optic networks.

Therefore, a need exists for equipment racks and assemblies that are more flexible, efficient, and capable of maintaining or easing installation and maintenance of the growing density of optical fibers and connectors.

### Summary

The present disclosure relates to cable guides that are horizontally stackable to provide a pathway to route optical fiber cables. The cable guide has a linking region that allows the cable guide to link with another cable guide to lengthen the cable pathway for optical fiber cables passing therethrough and to increase the degree of turn for the optical fiber cable. As additional cable guides are linked together, the amount of turn that an optical fiber cable can undergo through the cable pathway increases.

In one embodiment, a cable guide for guiding an optical fiber cable is provided. The cable guide comprising: a base having a front side, a rear side, a top side, and a bottom side; a first lateral limiting surface extending from the top side; a second lateral limiting surface extending from the top side; a first linking region in the front side of the base, the first linking region comprising: a first linking element adjacent a first receiving recess along the front side of the base; a second linking region in the rear side of the base, the second linking region comprising: a second linking element adjacent a second receiving recess along the rear side of the base; a first rotation limiter extending from the front side of the base; and a second rotation limiter extending from the rear side of the base.

In another embodiment, the cable guide further comprising: a first cable vertical limiter extending from the first lateral limiting surface; and a second cable vertical limiter extending from the second lateral limiting surface. In another embodiment, the cable guide further comprising: a first cable guide vertical limiter extending from the bottom side and extending beyond the front side; and a second cable guide vertical limiter extending from the bottom side and extending beyond the rear side. In another embodiment, the base includes a lateral axis, and wherein the first linking region is a mirror image of the second linking region about the lateral axis of the base. In another embodiment, the first linking element of the cable guide is configured to be inserted into a second receiving recess of a second cable guide to couple the first cable guide to the second cable guide.

In one embodiment, a cable joint is provided. The cable joint comprising: a first cable guide comprising: a first base having a first front side, a first rear side, a first top side, and a first bottom side; a first lateral limiting surface extending from the first top side; a second lateral limiting surface extending from the first top side; a first linking region in the first front side of the base, the first linking region comprising: a first linking element adjacent a first receiving recess along the front side of the base; a second linking region in the rear side of the first base, the second linking region comprising: a second linking element adjacent a second receiving recess along the rear side of the base; a first rotation limiter extending from the first front side of the first base; and a second rotation limiter extending from the first rear side of the first base; a second cable guide coupled to the first cable guide, the second cable guide comprising: a second base having a second front side, a second rear side, a second top side, and a second bottom side; a third lateral limiting surface extending from the second top side; a fourth lateral limiting surface extending from the second top side; a third linking region in the second front side of the base, the third linking region comprising: a third linking element adjacent a third receiving recess along the second front side of the second base; a fourth linking region in the second rear side of the second base, the fourth linking region comprising: a fourth linking element adjacent a fourth receiving recess along the second rear side of the second base; a third rotation limiter extending from the second front side of the second base; and a fourth rotation limiter extending from the second rear side of the second base.

In another embodiment, the first linking element is retained in the fourth receiving recess to couple the first cable guide to the second cable guide. In another embodiment, the first cable guide is coupled to the second cable guide in a snap fit. In another embodiment, the first cable guide and the second cable guide are rotatable relative to each other by an angle formed between a vertical axis of the first cable guide and a vertical axis of the second cable guide, and wherein the angle is between about 13° and about 25°. In another embodiment, the first cable guide further comprising: a first cable vertical limiter extending from the first lateral limiting surface; and a second cable vertical limiter extending from the second lateral limiting surface; the second cable guide further comprising: a third cable vertical limiter extending from the third lateral limiting surface; and a fourth cable vertical limiter extending from the fourth lateral limiting surface. In another embodiment, the cable joint further comprising: a first cable guide vertical limiter extending from the first bottom side and extending beyond the first front side; a second cable guide vertical limiter extending from the first bottom side and extending beyond the first rear side; a third cable guide vertical limiter extending from the second bottom side and extending beyond the second front side; a fourth cable guide vertical limiter extending from the second bottom side and extending beyond the second rear side. In another embodiment, the first cable guide further comprising: a lateral axis of the first base, wherein the first linking region is a mirror image of the second linking region about the lateral axis of the first base. In another embodiment, a cable guide assembly comprising: a plurality of cable joints, wherein the plurality of cable joints comprises seven (7) cable joints coupled to each other such that the cable guide assembly has an angle formed between a vertical axis of an eighth cable guide and a vertical axis of the first cable guide, and wherein the angle is between about 90° and about 120°. In another embodiment, a cable guide assembly comprising: a plurality of cable joints, wherein the plurality of cable joints comprises fourteen (14) cable joints coupled to each other such that the cable guide assembly has an angle formed between a vertical axis of a fifteenth cable guide and a vertical axis of the first cable guide, and wherein the angle is between about 170° and about 190°.

In one embodiment, a cable joint assembly is provided. The cable joint assembly comprising: a cable joint comprising: a first cable guide comprising: a first base having a first front side, a first rear side, a first top side, and a first bottom side; a first lateral limiting surface extending from the first top side; a second lateral limiting surface extending from the first top side; wherein the first lateral limiting surface and the second lateral limiting surface define a first cable passageway; a first linking region in the first front side of the base, the first linking region comprising: a first linking element adjacent a first receiving recess along the front side of the first base; a second linking region in the rear side of the first base, the second linking region comprising: a second linking element adjacent a second receiving recess along the rear side of the base; a first rotation limiter extending from the first front side of the first base; and a second rotation limiter extending from the first rear side of the first base; a second cable guide coupled to the first cable guide, the second cable guide comprising: a second base having a second front side, a second rear side, a second top side, and a second bottom side; a third lateral limiting surface extending from the second top side; a fourth lateral limiting surface extending from the second top side; wherein the third lateral limiting surface and the fourth lateral limiting surface define a second cable passageway; a third linking region in the second front side of the base, the third linking region comprising: a third linking element adjacent a third receiving recess along the second front side of the second base; a fourth linking region in the second rear side of the second base, the fourth linking region comprising: a fourth linking element adjacent a fourth receiving recess along the second rear side of the second base; a third rotation limiter extending from the second front side of the second base; and a fourth rotation limiter extending from the second rear side of the second base; wherein the first cable passageway and the second cable passageway form a continuous passageway in which at least one optical cable is inserted therethrough; and wherein the first linking element is inserted into the fourth receiving recess to couple the first cable guide to the second cable guide.

In another embodiment, the first cable guide is coupled to the second cable guide in a snap fit. In another embodiment, the first cable guide and the second cable guide are rotatable relative to each other by an angle formed between a vertical axis of the first cable guide and a vertical axis of the second cable guide, and wherein the angle is between about 13° and about 25°. In another embodiment, the first cable guide further comprising: a first cable vertical limiter extending from the first lateral limiting surface; and a second cable vertical limiter extending from the second lateral limiting surface; the second cable guide further comprising: a third cable vertical limiter extending from the third lateral limiting surface; and a fourth cable vertical limiter extending from the fourth lateral limiting surface. In another embodiment, the cable joint further comprising: a first cable guide vertical limiter extending from the first bottom side and extending beyond the first front side; a second cable guide vertical limiter extending from the first bottom side and extending beyond the first rear side; a third cable guide vertical limiter extending from the second bottom side and extending beyond the second front side; a fourth cable guide vertical limiter extending from the second bottom side and extending beyond the second rear side. In another embodiment, the first cable guide further comprising: a lateral axis of the first base, wherein the first linking region is a mirror image of the second linking region about the lateral axis of the first base. In another embodiment, a cable guide assembly comprising: a plurality of cable joints, wherein the plurality of cable joints comprises seven (7) cable joints coupled to each other such that the cable guide assembly has an angle formed between a vertical axis of an eighth cable guide and a vertical axis of the first cable guide, and wherein the angle is between about 90° and about 120°. In another embodiment, a cable guide assembly comprising: a plurality of cable joints, wherein the plurality of cable joints comprises fourteen (14) cable joints coupled to each other such that the cable guide assembly has an angle formed between a vertical axis of a fifteenth cable guide and a vertical axis of the first cable guide, and wherein the angle is between about 170° and about 190°.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
FIG. 1 is a schematic view illustrating an exemplary carrier network including a passive optical network in which embodiments of the disclosure may be used.
FIG. 2 is a perspective view of a rack mount housing in an exemplary equipment rack in the fiber optic network shown in Fig. 1, illustrating a rack mount assembly in an installed, closed position in the equipment rack.
FIG. 3 is a front perspective view of a cable guide in accordance with the present disclosure.
FIG. 4 is a top view of the cable guide of FIG. 3.
FIG. 5 is a bottom view of the cable guide of FIG. 3.
FIG. 6 is a top view of a cable joint comprising the cable guides of FIG. 3.
FIG. 7 is a bottom view of the cable joint of FIG. 6.
FIG. 7A is a top view of the cable joint of FIG. 6 where the cable joint has an angle between the cable guides in accordance with the present disclosure;
FIG. 8 is a top view of multiple cable guides of FIG. 3 that are linked together illustrating a resulting turn of the cable guides and cable joints.
FIG. 9 is another top view of multiple cable guides of FIG. 3 that are linked together illustrating a resulting turn of the cable guides and the cable joints.
FIG. 10 is a front perspective view of a cable guide assembly in the context of the rack mount housing of FIG. 2.
FIG. 11 is a rear perspective view of a cable guide assembly in the context of the rack mount housing of FIG. 2.

### Detailed Description

The following description of the embodiments of the present invention is merely exemplary in nature and is in no way intended to limit the invention, its application, or uses. The following description is provided herein solely by way of example for purposes of providing an enabling disclosure of the invention, but does not limit the scope or substance of the invention.

The present disclosure relates to cable guides that are horizontally stackable to provide a pathway to route optical fiber cables. The cable guide has a linking region that allows the cable guide to link with another cable guide to lengthen the cable pathway for optical fiber cables passing therethrough and to increase the degree of turn for the optical fiber cable. As additional cable guides are linked together, the amount of turn that an optical fiber cable can undergo through the cable pathway increases.

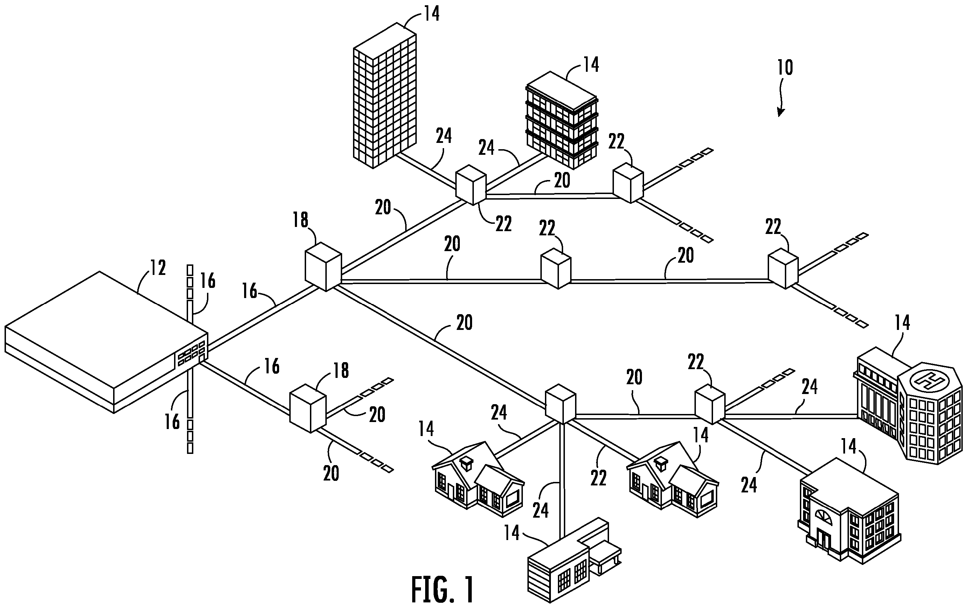

Embodiments of the disclosure pertain to a rack mount housing for use in fiber optic routing and connectivity in equipment racks and to a method for installing the rack mount housing in the equipment rack for use in a FTTx carrier network, such as that shown by way of example in FIG. 1 and described below.

As illustrated in FIG. 1, an exemplary FTTx carrier fiber optic network 10 distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14. Equipment racks may be located in any single one or each of the switching points 12, local convergence points 18, and remote network access points 22 in the carrier network 10. These locations are exemplary, as equipment racks may be located in other locations, such as in data centers.

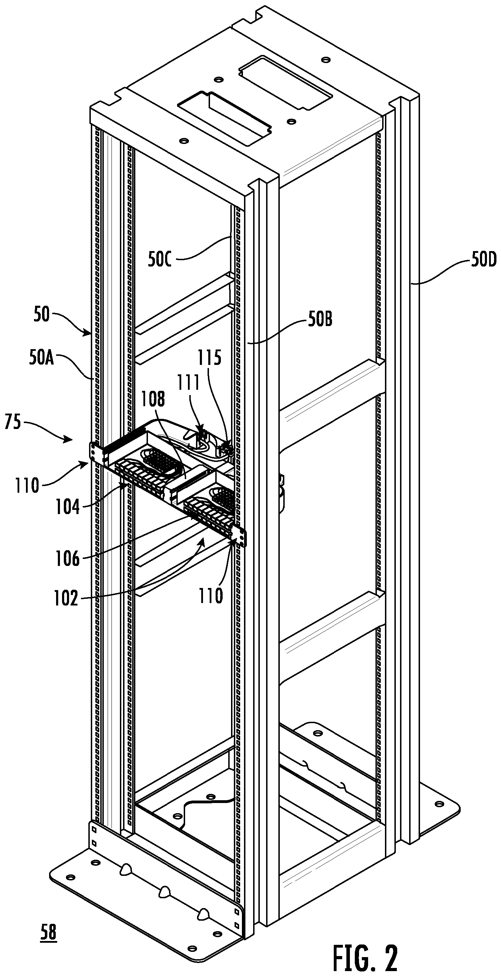

An equipment rack 50 is shown in FIG. 2. Equipment rack 50 may receive one or more feeder cables 44, which may be any one of the feeder cables 16, distribution cables 20, or drop cables 24 in FIG. 1. The equipment rack 50 is configured to house network equipment and to support one or more rack mount housings 100 to which the feeder cables 44 may be routed. As shown in FIG. 2, the equipment rack 50 may include a pair of front vertical frame members 50A, 50B and a pair of rear vertical frame members 50C, 50D where the area between the front vertical frame members 50A, 50B and the rear vertical frame members 50C, 50D define an interior space within equipment rack 50 for each rack mount housing 100. In some embodiments and as shown in FIG. 2, rack mount housing 100 is coupled to front vertical frame members 50A, 50B as discussed in greater detail herein. However, it is within the scope of the present disclosure that in alternate embodiments, rack mount housing 100 is coupled to rear vertical frame members 50A, 50B. While embodiments of the rack mount housing 100 are not generally limited in dimension, the rack mount housing 100 is scalable to meet 19", 21", and 23" or other rack standards.

Rack mount housing 100 is generally installed to the front vertical frame members 50A, 50B or the rear vertical frame members 50C, 50D such that a technician or other personnel can access and maintain the rack mount housing 100 while standing on the floor 58. Although only a single rack mount housing 100 is shown in FIG. 2, additional rack mount housings 100 may be mounted to the vertical frame members 50A-50D to populate the entirety of a height of the equipment rack 50 along the vertical frame members 50A-50D. Fibers from the feed cable 44 may then be routed to and terminated within each rack mount housing 100.

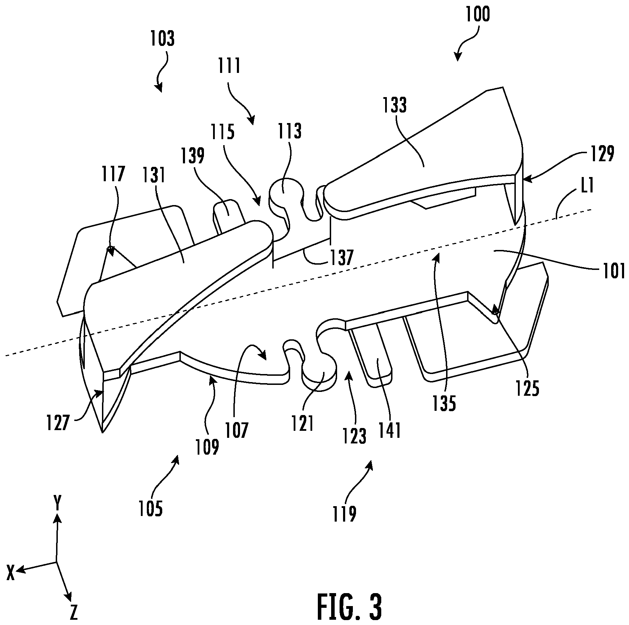

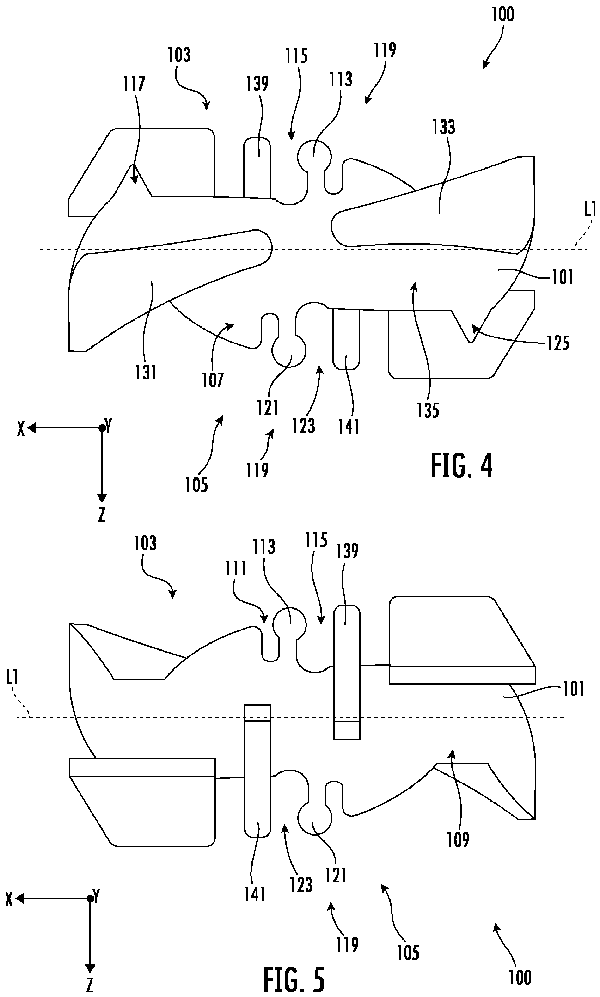

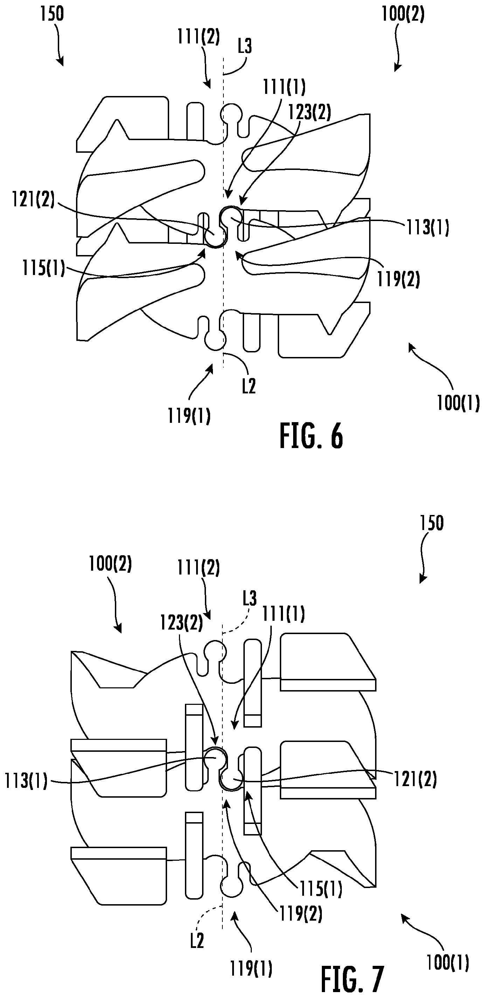

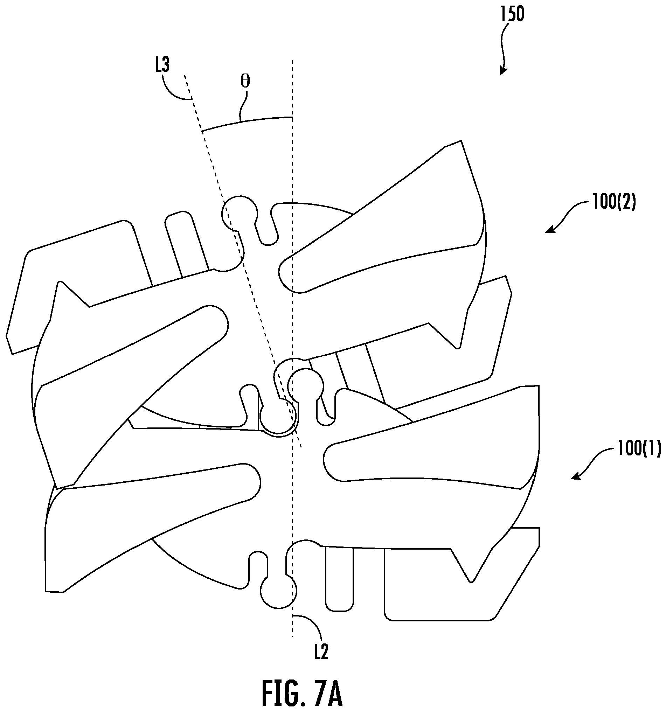

Referring now to FIGS. 3-5, a cable guide 100 is shown. Cable guide 100 comprises a base 101 having a front side 103, a rear side 105, a top side 107 and a bottom side 109. As shown, the cable guide 100 further comprises a first linking region 111 and a first rotation limiter 117 extending from the front side 103 of the base 101. The first linking region 111 is configured to couple with a second linking region 119 of another cable guide 100 to create a cable joint 150 as shown in FIGS. 6 and 7 and discussed in greater detail below. The first linking region 111 comprises a first linking element 113 and a first receiving recess 115 adjacent to the first linking element 113. The first linking element 113 is configured to be received within a second receiving recess 123 of another cable guide 100 when creating the cable joint 150 as shown in FIGS. 6 and 7 and as discussed in greater detail below. The first receiving recess 115 is configured to receive a second linking element 121 from another cable guide 100 in a snap fit configuration such that the coupled cable guides 100 form cable joint 150, and each cable guide 100 within the cable joint 150 is rotatable about an axis of the first receiving recess 115 as discussed herein. In some embodiments, the first linking element 113 has a corresponding shape (e.g., a circle) that corresponds to the shape of the second receiving recess 123. It is within the scope that alternate shapes of the linking elements 113, 121 and the receiving recesses 115, 123 may be used.

As mentioned previously, a first rotation limiter 117 extends from the front side 103. The first rotation limiter 117 is configured to limit the amount of rotation of cable guide 100 in a particular direction by contacting the rear side 105 of another cable guide 100 during rotation.

As also shown in FIGS. 3-5, cable guide 100 further comprising a second linking region 119 and a second rotation limiter 125 extending from the rear side 105 of the base 101. The second linking region 119 is configured to couple with a first linking region of another cable guide 100 to create a cable joint 150 as discussed herein. The second linking region 119 comprises a second linking element 121 and a second receiving recess 123 adjacent to the second linking element 121. The second linking element 121 is configured to be received within a first receiving recess of another cable guide 100 when creating the cable joint 150 as discussed herein. The second receiving recess 123 is configured to receive a first linking element from another cable guide 100 in a snap fit configuration such that the coupled cable guides 100 form a cable joint 150, and each cable guide 100 within the cable joint 150 is rotatable about an axis of the second receiving recess 123 as discussed herein.

As mentioned previously, a second rotation limiter 125 extends from the rear side 105. The second rotation limiter 125 is configured to limit the amount of rotation of cable guide 100 in a particular direction by contacting the front side 103 of another cable guide 100 during rotation as discussed herein.

As shown in FIGS. 3-5, base 101 of cable guide 100 has a longitudinal axis L1, and the front side 103 and the rear side 105 are mirror images of each other. In particular, the locations of the first linking region 111 and the first rotation limiter 117 on front side 103 are mirror images of the locations of the second linking region 119 and the second rotation limiter 125 on the rear side 105. This configuration enables the linking of the first linking region 111 of one cable guide 100 to the second linking region 119 of another cable guide 100 such that no substantial misalignment between the cable guides 100 is present when the cable guides 100 are not rotated.

With continued reference to FIGS. 3-5, the cable guide 100 further comprises a first lateral limiting surface 127 and a second lateral limiting surface 129 extending from the top side 107 of the base 101. The lateral limiting surfaces 127, 129 provide lateral boundaries (x direction of the Cartesian coordinate system as shown) for the optical cables that are seated within the cable guide 100 as discussed herein. Extending from the lateral limiting surfaces 127, 129 are first cable vertical limiter 131 and second cable vertical limiter 133. First and second cable vertical limiters 131, 133 provide vertical boundaries (y direction of the Cartesian coordinate system as shown) for optical cables that are seated within the cable guide 100 as discussed herein. Lateral limiting surfaces 127, 129 and first and second cable vertical limiters 131, 133 define a cable pathway 135 that is configured to house optical cables within cable guide 100 and within cable joints 150. As shown, the first and second vertical limiters 131, 133 are spaced apart from each other by a gap 137, which allows for insertion of optical cables into the cable pathway 135 of cable guide 100.

With continued reference to FIGS. 3-5, the cable guide 100 further comprises a first cable guide vertical limiter 139 and a second cable guide vertical limiter 141 extending from the bottom side 109 of the base 101. As shown, the first cable guide vertical limiter 139 extends from the bottom side 109 of the base 101 and extends towards front side 103. Similarly, the second cable guide vertical limiter 141 extends from the bottom side 109 of the base 101 and extends towards rear side 105. The first and second cable guide vertical limiters 139, 141 are configured to limit motion of cable guide 100 in the vertical direction (y direction of the Cartesian coordinate system as shown) when multiple cable guides 100 are linked together.

Referring now to FIGS. 6 and 7, a cable joint 150 is shown. Cable joint 150 comprises a first cable guide 100(1) as described above that is coupled to a second cable guide 100(2). Cable guide 100(2) is substantially the same as cable guide 100 with like reference numbers (except with a numeral added thereto (e.g., (1), (2), etc.)) referring to like components of cable guide 100(1). Cable guides 100(1), 100(2) are coupled to each other by coupling the first linking region 111 (1) of the first cable guide 100(1) to the second linking region 119(2) of the second cable guide 100(2). In particular, as shown, the first linking element 113(1) of the first cable guide 100(1) is inserted into the second receiving recess 123(2) of the second cable guide 100(2), and the second linking element 121(2) of the second cable guide 100(2) is inserted into the first receiving recess 115(1) of the first cable guide 100(1). The linking elements 113(1), 121(2) are inserted into the receiving recesses 123(2), 115(1), respectively, as outlined above in a snap fit. In this way, cable guides 100(1), 100(2) are horizontally stackable, and the configuration of cable joint 150 leaves first linking regions 111(2) of second cable guide 100(2) and second linking region 119(1) of first cable guide 100(1) available for additional cable guides 100 to be attached thereto which increases the range of rotation of the resulting cable joint as discussed herein.

In this configuration, the first cable guide 100(1) and the second cable guide 100(2) are rotatable relative to each other about an axis that is between the axes of the receiving recesses 123(2), 115(1). The first cable guide 100 or the second cable guide 100(2) of the cable joint 150 can rotate relative to each other such that cable joint 150 has an angle O formed between a vertical axis L2 of the first cable guide 100(1) and a vertical axis L3 of the second cable guide 100(2) that is in alignment with vertical axis L2 (angle O of 0° relative to vertical axis L2) as shown.

Referring briefly to FIG. 7A, when the cable guides 100(1), 100(2) are rotated as discussed above, the vertical axis L2 and the vertical axis L3 forms angle O. In some embodiments, cable joint 150 has an angle O that ranges from about - 13° to about 13° as formed between vertical axes L2, L3. In some embodiments, cable joint 150 has an angle O that ranges from about 13° to about 25° as formed between vertical axes L2, L3. In some embodiments, angle O is about 13°. It is within the scope of the present disclosure that in alternate embodiments, angle O has alternate suitable angle ranges for cable joint 150 as formed by vertical axes L2, L3.

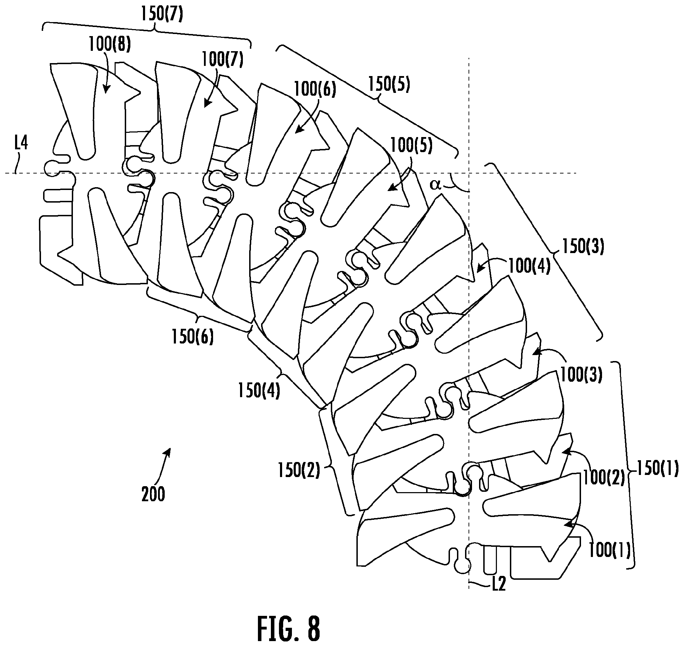

Referring now to FIG. 8, a cable joint 200 is shown where cable joint 200 comprises additional cable guides 100(3)-100(8) that are added onto a cable joint 150(1) as shown. In this embodiment, cable joint 200 comprises a chain of eight (8) cable guides 100(1)-100(8) that are linked together to form cable joints 150(1)-150(7). Each cable joint 150 has an angle range of ±13° as discussed above, and the addition of each cable joint 150(2)-150(7) adds another 13° of range to the angle α of cable joint 200. It is within the scope of the present disclosure that in alternate embodiments, each cable joint 150(1)-150(8) has a different range of angles Θ (e.g., up to about 25°) that contribute to the overall range of angle α of cable joint 200. As such, in the embodiment shown in FIG. 8, cable joint 200 has an angle α that is formed between a vertical axis L4 of cable guide 100(8) and the vertical axis L2 of cable guide 100(1) where angle α ranges from about 90° to about 120°. In some embodiments, angle α is about 90°. It is within the scope of the present disclosure that in alternate embodiments, angle α has alternate suitable angle ranges for cable joint 200 relative to the vertical axis L2 of the first cable guide 100(1).

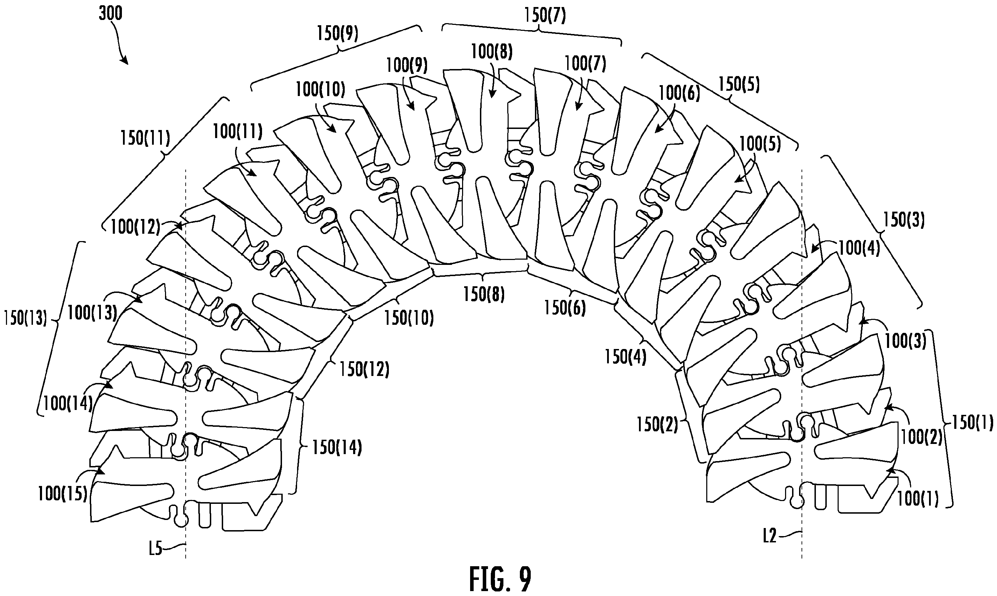

Similarly, as shown in FIG. 9, a cable joint 300 is shown where cable joint 300 comprises fourteen (14) cable joints 150(1)-150(14) where cable joint 300 has an angle that is formed between a vertical axis L5 of cable guide 100(14) and the vertical axis L2 of the first cable guide 100(1). In some embodiments, the angle formed between the vertical axis L5 and the vertical axis L2 ranges from about 170° to about 190°. In some embodiments, the angle formed between the vertical axis L5 and the vertical axis L2 is about 180°. As mentioned above, it is within the scope of the present disclosure that in alternate embodiments, each cable joint 150(1)-150(14) has a different range of angles O that contribute to the overall range of angle of cable joint 300. Also, it is within the scope of the present disclosure that in alternate embodiments, the angle of cable joint 300 has alternate suitable angle ranges relative to the vertical axis L2 of the first cable guide 100(1).

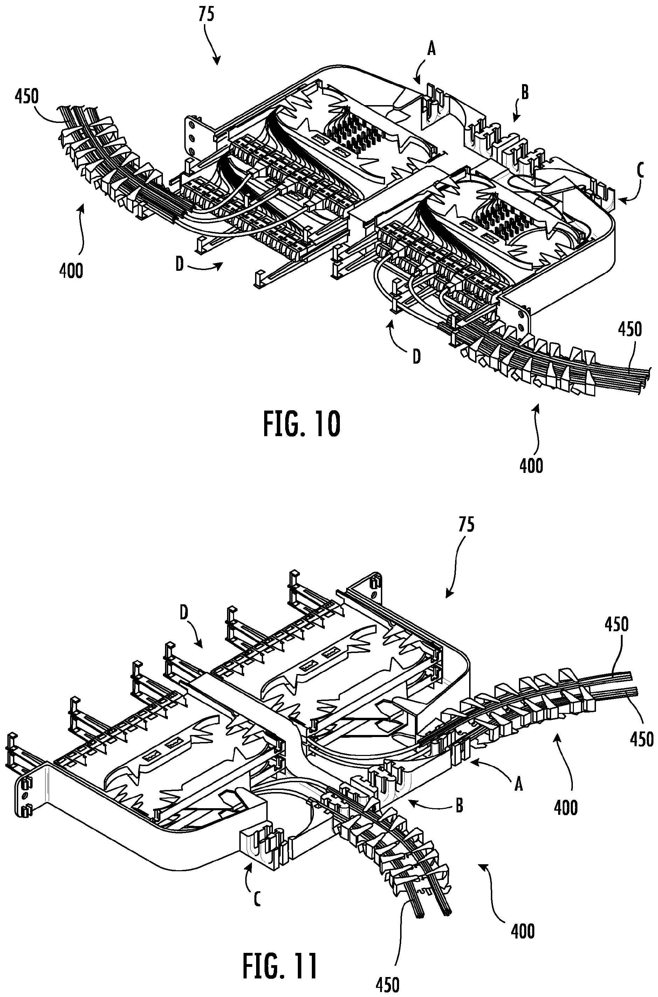

As discussed above, adding additional cable guides 100 and additional cable joints 150 increases the overall angular range of the resulting cable joint. This enables greater flexibility in moving optical cables within a rack 50 as discussed above in FIG. 2. Referring briefly to FIGS. 10 and 11, cable joints 400 are shown, and the use of cable joint 400 enable optical cables 450 that are fed through cable pathway 135 of cable joint 400 to be fed into a rack mount housing 100 at various entry points A-D of rack mount housing 100 at varying angles without damaging the optical fibers housed within optical cables 450. Stated another way, due to the angular range of the cable joint 400, optical cables 450 can be fed to rack mount housing 100 at various angles to enable spatial efficiency of the optical cables 450 within the equipment rack 50 without damaging the optical fibers within the optical cables 450 due to sharp bends of the optical cables 450.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A first cable guide for guiding an optical fiber cable, the first cable guide comprising:
a first base having a first front side, a first rear side, a first top side, and a first bottom side;
a first lateral limiting surface extending from the first top side;
a second lateral limiting surface extending from the first top side;
a first linking region in the front side of the base, the first linking region comprising:
a first linking element adjacent a first receiving recess along the first front side of the base;
a second linking region in the rear side of the first base, the second linking region comprising:
a second linking element adjacent a second receiving recess along the rear side of the base;
a first rotation limiter extending from the first front side of the first base; and
a second rotation limiter extending from the first rear side of the first base.

2. The first cable guide of claim 1, further comprising:
a first cable vertical limiter extending from the first lateral limiting surface; and
a second cable vertical limiter extending from the second lateral limiting surface.

3. The first cable guide of claim 1 or claim 2, further comprising:
a first cable guide vertical limiter extending from the first bottom side and extending beyond the first front side; and
a second cable guide vertical limiter extending from the first bottom side and extending beyond the first rear side.

4. The first cable guide of any of claims 1-3, wherein the first base includes a lateral axis, and wherein the first linking region is a mirror image of the second linking region about the lateral axis of the first base.

5. The first cable guide of any of claims 1-4, wherein the first linking element of the first cable guide is configured to be inserted into a second receiving recess of a second cable guide to couple the first cable guide to the second cable guide.

6. A cable joint comprising:
a first cable guide of any of claims 1-5;
a second cable guide coupled to the first cable guide, the second cable guide comprising:
a second base having a second front side, a second rear side, a second top side, and a second bottom side;
a third lateral limiting surface extending from the second top side;
a fourth lateral limiting surface extending from the second top side;
a third linking region in the second front side of the base, the third linking region comprising:
a third linking element adjacent a third receiving recess along the second front side of the second base;
a fourth linking region in the second rear side of the second base, the fourth linking region comprising:
a fourth linking element adjacent a fourth receiving recess along the second rear side of the second base;
a third rotation limiter extending from the second front side of the second base; and
a fourth rotation limiter extending from the second rear side of the second base.

7. The cable joint of claim 6, wherein the first linking element is retained in the fourth receiving recess to couple the first cable guide to the second cable guide.

8. The cable joint of claim 7, wherein the first cable guide is coupled to the second cable guide in a snap fit.

9. The cable joint of any of claims 6-8, wherein the first cable guide and the second cable guide are rotatable relative to each other by an angle formed between a vertical axis of the first cable guide and a vertical axis of the second cable guide, and wherein the angle is between about 13° and about 25°.

10. The cable joint of any of claims 6-9, wherein:
the second cable guide further comprising:
a third cable vertical limiter extending from the third lateral limiting surface; and
a fourth cable vertical limiter extending from the fourth lateral limiting surface.

11. The cable joint of any of claims 6-10, further comprising:
a third cable guide vertical limiter extending from the second bottom side and extending beyond the second front side;
a fourth cable guide vertical limiter extending from the second bottom side and extending beyond the second rear side.

12. A cable guide assembly comprising:
a plurality of cable joints of any of claims 6-11, wherein the plurality of cable joints comprises seven (7) cable joints coupled to each other such that the cable guide assembly has an angle formed between a vertical axis of an eighth cable guide and a vertical axis of the first cable guide, and wherein the angle is between about 90° and about 120°.

13. A cable guide assembly comprising:
a plurality of cable joints of any of claims 6-11, wherein the plurality of cable joints comprises fourteen (14) cable joints coupled to each other such that the cable guide assembly has an angle formed between a vertical axis of a fifteenth cable guide and a vertical axis of the first cable guide, and wherein the angle is between about 170° and about 190°.

14. A cable joint assembly comprising:
a cable joint of any of claims 6-13;
wherein the first lateral limiting surface and the second lateral limiting surface define a first cable passageway;
wherein the third lateral limiting surface and the fourth lateral limiting surface define a second cable passageway;
wherein the first cable passageway and the second cable passageway form a continuous passageway in which at least one optical cable is inserted therethrough.
